# EUROPEAN PATENT APPLICATION

(11) **EP 1 045 219 A1**
(43) Date of publication of application: **18.10.2000**
(21) Application number: 99112781.2
(22) Date of filing: 02.07.1999
(51) Int. Cl.: F28F 19/00, F02C 7/143

(54) **Method for reducing frost formation on a heat exchanger**

(30) Priority: 16.04.1999 JP 10916499
(71) Applicant: THE DIRECTOR-GENERAL OF THE INSTITUTE OF SPACE AND ASTRONAUTICAL SCIENCE, Sagamihara-shi, Kanagawa-ken (JP)
(72) Inventor: Tanatsugu, Nobuhiro, Sagamihara-shi, Kanagawa-ken (JP); Harada, Kenya, Sagamihara-shi, Kanagawa-ken (JP)
(74) Representative: Reinhard - Skuhra - Weise & Partner

(57) **Abstract**

The present invention provides a method for reducing frost formation on a heat transfer surface in a precooler of an air breathing engine. In the precooler (1), the heat exchanger tube (2) is provided. Into the heat exchanger tube (2), liquid hydrogen (12) serving as a coolant is supplied. The main air flow (11) is sent to the precooler (1) via the intake duct (3), and the main air flow which is cooled down there, is then sent to a compressor of the air breathing engine. Via the nozzle (4) provided in the intake duct (3), liquid oxygen (13) is sprayed into the main air flow (11). As the sprayed liquid oxygen (13) is vaporized, the main air flow (11) in the intake duct (3) is cooled down to a temperature below the dew point, and the water vapor contained in the main air flow (11) is condensed by nucleation. Ice piece thus formed is carried on the main air flow (11) into the precooler (1). As the vapor passes around the heat exchanger tubes (2) in the form of ice piece, the amount of the frost formation on the surface of the heat exchanger tube (2) is reduced as compared to the case where the vapor passes as it is.

## Description

The present invention relates to a method for reducing frost formation on a heat exchanger, and more specifically to a method suitable for a precooler of an air breathing engine.

In order to realize a liquid air cycle engine or a precooled turbojet engine, the development of a high-performance precooler is a key technology. The foremost concern in the development of such a precooler is frost formation on the heat transfer surface of the heat exchanger.

When frost is formed on a heat transfer surface, the heat transfer rate decreases due to the thermal resistance of the frost layer. Further, the flow path of the main air flow narrows, and the pressure loss of the flow increases. The frost layer formed on the heat transfer surface in a cryogenic state has a low density and a low thermal conductivity, and therefore the performance of the heat exchanger is greatly influenced.

In case of the precooler of an air breathing engine used for a space craft, the frost formation creates a trouble particularly when it is flying at low altitude, which is in the acceleration phase. During this period (about several tens to several hundreds of seconds), the operation of the engine cannot be stopped. Therefore, a defrosting cycle, which is applicable in the heat exchanger used for refrigeration or air-conditioning, cannot be applied.

The present invention has been proposed in consideration of the above-described problem, and the object thereof is to provide a method for reducing frost formation on a heat transfer surface of a cryogenic heat exchanger, such as a precooler of an air breathing engine.

According to the method of the present invention, cryogenic fluid is mixed into the flow of a gas to be cooled which contains a frost formation material, at the upstream side of the heat exchanger, and thus the frost formation material is condensed in the flow.

As described above, when the cryogenic fluid is mixed into the flow of the gas to be cooled, the flow is cooled down to a temperature lower than the dew point, and the frost formation material is condensed in the flow. The condensed frost formation material is carried away by the flow of the to-be-cooled gas, and passes around the heat transfer surface. As a result, the amount of frost deposited on the heat transfer surface decreases.

For example, in the case where the heat exchanger is a precooler of an air breathing engine, the gas to be cooled is air, and the frost formation material is water vapor.

It should be noted here that a typical cryogenic fluid is liquid oxygen or liquid nitrogen obtained by cryogenic separation air process. Further, when liquid natural gas is used as the cryogenic fluid, it also serves as part of the fuel for the engine.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram of the method of the present invention when it is applied to a precooler of an air breathing engine;
FIG. 2 is a graph showing the relationship between the amount of sprayed liquid oxygen and temperature of the main air flow when liquid oxygen is sprayed into the main air flow;
FIG. 3 is a graph showing the relationship between the amount of sprayed liquid nitrogen and temperature of the main air flow when liquid nitrogen is sprayed into the main air flow; and
FIG. 4 is a graph showing the relationship between the temperature of the main air flow and the frost formation rate when low-temperature nitrogen gas is sprayed into the main air flow, in a single row heat exchanger model.

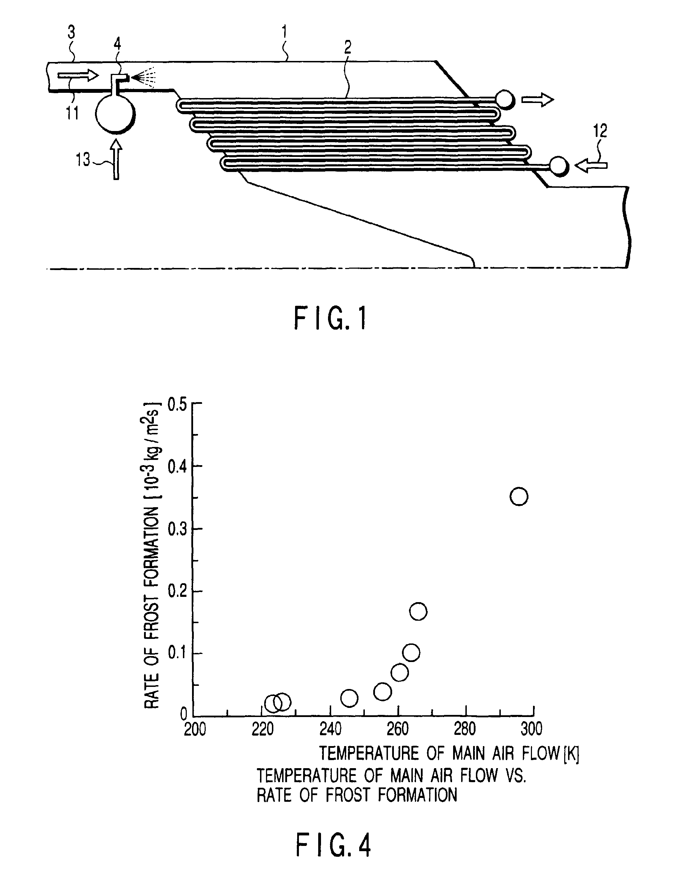

FIG. 1 is a schematic diagram illustrating the method for reducing frost formation, according to the present invention, when it is applied to a precooler of an air breathing engine. The figure includes a precooler 1, a heat exchanger tube 2 (heat transfer surface), an intake duct 3, a nozzle 4, main air flow 11 (gas to be cooled), liquid hydrogen 12 (coolant) and liquid oxygen 13 (cryogenic fluid).

In the precooler for supplying precooled main air flow to the air breathing engine (not shown), a heat exchanger tube 2 is provided. Into the heat exchanger tube 2, liquid hydrogen 12 serving as a coolant is supplied. The main air flow 11 is sent to the precooler 1 via the intake duct 3, and the main air flow which is cooled down there, is sent to a compressor of the air breathing engine.

In the middle of the intake duct 3, a nozzle 4 is provided, through which liquid oxygen 13 is sprayed into the main air flow 11. As the sprayed liquid oxygen 13 is vaporized, the main air flow 11 in the intake duct 3 is cooled down to a temperature lower than the dew point, and the water vapor contained in the main air flow is condensed by nucleation. Ice piece thus formed is carried on the main air flow 11 into the precooler 1, and passes between the heat exchanger tubes 2.

Thus, since the water passes around the heat exchanger tube 2 in the form of ice piece, the amount of the frost formation on the surface of the heat exchanger tube 2 is reduced as compared to the case where the water vapor passes as it is. Consequently, the efficiency of heat transfer of the precooler 1 can be maintained at high level.

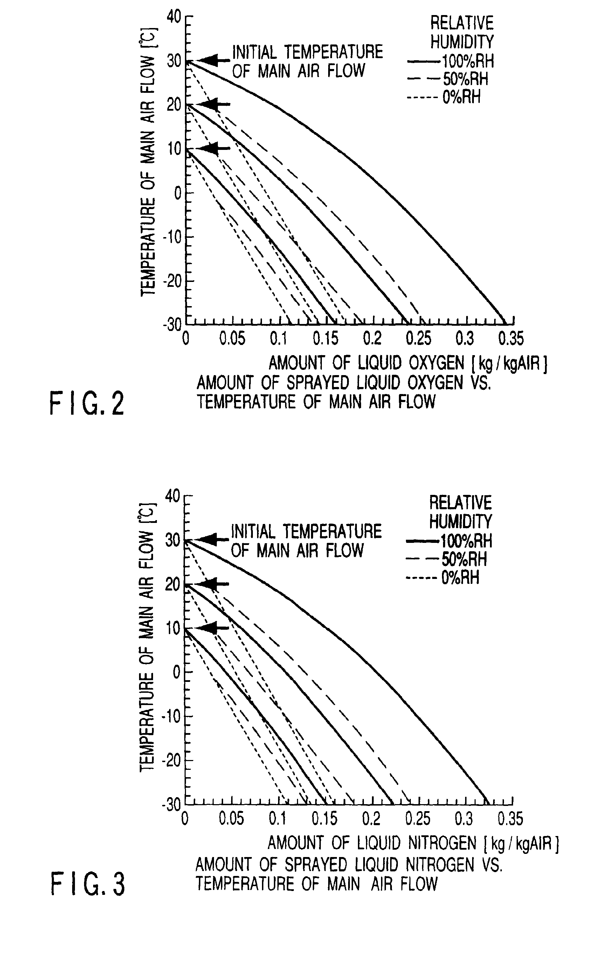

FIG. 2 shows the results of the calculations for the relationship between the amount of liquid oxygen sprayed and the temperature of the main air flow, in the case where liquid oxygen is sprayed into the main air flow. Similarly, FIG. 3 shows the results of the calculations for the relationship between the amount of liquid nitrogen sprayed and the temperature of the main flow, in the case where liquid nitrogen is sprayed into the main air flow.

It should be noted that in the case where the method of the present invention is applied to a precooler of an air breathing engine, when liquid oxygen is used as the cryogenic fluid, it also serves as an oxidizer, or when liquid natural gas is used, it serves partially as fuel, and therefore the performance of the engine can be enhanced in both cases.

FIG. 4 illustrates the relationship between the temperature of the main air flow and the frost formation rate when the method of the present invention is applied to a single row heat exchanger model (having an outer diameter of the heat exchanger tube of 8 mm and a pitch of 12 mm). In these experiments, the main air flow was cooled down by mixing a low-temperature nitrogen gas of about 100K to the main air flow. The temperature of the heat transfer surface was 90K and the mass flow of the water vapor in the main air flow was 10.4 g/(m²·s). The Reynolds number of the main air flow was 1570. The rate of frost formation was obtained by weighing the frost layer formed on the front surface of the heat exchanger tube for 100 seconds starting from the beginning of the frost formation.

According to the method of the present invention, the rate of frost formation on the heat transfer surface is reduced, thereby making it possible to improve the performance of the precooler. When the method of present invention is applied to a precooler of an air breathing engine used for a space craft, the frost formation can be prevented without stopping the operation of the precooler.

## Claims

1. A method for reducing frost formation on a heat transfer surface (2) of a heat exchanger, characterized in that cryogenic fluid (13) is mixed into a flow of a gas to be cooled which contains a frost formation material, at the upstream side of the heat exchanger, and thus the frost formation material is condensed in the stream.

2. A method according to claim 2, characterized in that the gas to be cooled is air and the frost formation material is water vapor.

3. A method according to claim 2, characterized in that the cryogenic fluid is liquid oxygen.

4. A method according to claim 2, characterized in that the cryogenic fluid is liquid nitrogen.

5. A method according to claim 2, characterized in that the cryogenic fluid is liquid natural gas.

6. A precooler of an air breathing engine, characterized in that a nozzle (4) for spraying cryogenic fluid (13) is provided in an intake duct (3) for main air flow (11).
